# EUROPEAN PATENT SPECIFICATION

(11) **EP 1 819 635 B1**
(45) Date of publication and mention of the grant of the patent: **03.03.2010**
(21) Application number: 05803700.3
(22) Date of filing: 11.11.2005
(51) Int. Cl.: C01B 11/02

(54) **CHEMICAL PROCESS AND PRODUCTION UNIT**
CHEMISCHES VERFAHREN UND PRODUKTIONSEINHEIT
PROCÉDÉ CHIMIQUE ET UNITÉ DE PRODUCTION

(30) Priority: 06.12.2004 US 633130 P; 12.01.2005 EP 05100143
(43) Date of publication of application: 22.08.2007
(73) Proprietor: Akzo Nobel N.V., 6800 SB Arnhem (NL); Eka Chemicals AB, 445 80 Bohus (SE)
(72) Inventor: CHARLES, Gary, Marietta, GA 30062 (US); OLSON, Daniel, D., Woodstock, GA 30189 (US); BRYANT, Patrick, S., Woodstock, GA 30189 (US)
(74) Representative: Schalkwijk, Pieter Cornelis
(86) International application number: PCT/SE2005/001703
(87) International publication number: WO 2006/062456

(56) References cited:
- US-A- 4 744 956
- US-A1- 2003 031 621
- US-A1- 2004 175 322
- US-B2- 6 790 427

## Description

The present invention relates to a process, and a production unit for the production of an aqueous solution comprising chlorine dioxide.

Chlorine dioxide is used in various applications such as pulp bleaching, fat bleaching, water purification and removal of organic materials from industrial wastes. Since chlorine dioxide is not storage stable, it is generally produced on-site.

In large scale processes chlorine dioxide is usually produced by reacting alkali metal chlorate with a reducing agent in an aqueous reaction medium. Chlorine dioxide may be withdrawn from the reaction medium as a gas, as in the processes described in e.g. US patents 5091166, 5091167 and EP patent 612686. Normally, the chlorine dioxide gas is then absorbed into water to form an aqueous solution thereof. These large-scale processes are very efficient but require extensive process equipment and instrumentation.

For the production of chlorine dioxide in small-scale units, such as for water purification applications or small bleaching plants, it is favourable not to separate chlorine dioxide from the reaction medium but to withdraw a chlorine dioxide containing solution directly from the reactor, optionally after dilution with water. Such processes have in recent years become commercial and are described in e.g. US patents 2833624, 4534952, 5895638, 6387344, 6790427 and in US patent applications Publ. No. 2004/0175322 and Publ. No. 2003/0031621. The required process equipment and instrumentation are considerably less extensive than in the large-scale processes described above. However, there is still a need for further improvements.

In the processes based on alkali metal chlorate where a chlorine dioxide containing solution is withdrawn directly from the reactor, it has been difficult to obtain solutions with such a high concentration of chlorine dioxide as desired for many applications, like recycle paper bleaching, bagasse bleaching, or small-scale pulp bleaching.

It is an object of the invention to provide a simple process enabling direct production of chlorine dioxide in an aqueous solution of high concentrations.

It is another object of the invention to provide a production unit for performing the process.

It has surprisingly been found possible to meet these objects by providing a continuous process for producing chlorine dioxide comprising the steps of continuously:
a) feeding to a reactor an acid, hydrogen peroxide and alkali metal chlorate;
b) reacting the alkali metal chlorate with the acid and the hydrogen peroxide to form a product stream containing chlorine dioxide, oxygen and alkali metal salt of the acid,
c) bringing the product stream from the reactor to an eductor and mixing it with motive water fed to the eductor and thereby forming a diluted product stream;
d) removing oxygen from the diluted product stream;
e) withdrawing part of the diluted product stream, before, during or after the step of removing oxygen;
f) adding water to the non-withdrawn part of the diluted product stream to form a recycle stream; and,
g) bringing the recycle stream to the eductor and feeding it thereto as motive water.

The reactor and the eductor can be operated as described in the earlier mentioned documents US patents 2833624, 4534952, 5895638, 6387344, 6790427 and US patent application Publ. No. 2004/0175322 and Publ. No. 2003/0031621.

The alkali metal chlorate is suitably fed to the reactor as an aqueous solution. The alkali metal may, for example, be sodium, potassium or mixtures thereof, of which sodium is most preferred. The acid is preferably a mineral acid such as sulfuric acid, hydrochloric acid, nitric acid, perchloric acid or mixtures thereof, of which sulfuric acid is most preferred. The molar ratio H₂O₂ to ClO₃⁻ fed to the reactor is suitably from 0.2:1 to 2:1, preferably from 0.5:1 to 1.5:1, most preferably from 0.5:1 to 1:1. Alkali metal chlorate always contains some chloride as an impurity, but it is fully possible also to feed more chloride to the reactor, such as metal chloride or hydrochloric acid. However, in order to minimize the formation of chlorine it is preferred to keep the amount of chloride ions fed to the reactor low, suitably below 1 mole %, preferably below 0.1 mole %, more preferably less than 0.05 mole %, most preferably less than 0.02 mole % Cl⁻ of the ClO₃⁻ (including chloride as an impurity in the chlorate and optionally extra added chloride).

In the case sulfuric acid is used as a feed to the reactor, it preferably has a concentration from 60 to 98 wt%, most preferably from about 70 to about 85 wt% and preferably a temperature from 0 to 80°C, most preferably from 20 to 60°C. Preferably from 2 to 7 kg H₂SO₄, most preferably from 3 to 5 kg H₂SO₄ is fed per kg ClO₂ produced. In order to use sulphuric acid of high concentration, a dilution and cooling scheme as described in US patent application Publ. No. 2004/0175322 is preferably applied.

In a particularly preferred embodiment alkali metal chlorate and hydrogen peroxide is fed to the reactor in the form of a premixed aqueous solution, for example a composition as described in US 6387344. Such a composition may be an aqueous solution comprising from 1 to 6.5 moles/litre, preferably from 3 to 6 moles/litre of alkali metal chlorate, from 1 to 7 moles/litre, preferably from 3 to 5 moles/litre of hydrogen peroxide and at least one of a protective colloid, a radical scavenger or a phosphonic acid based complexing agent, wherein the pH of the aqueous solution suitably is from 0.5 to 4, preferably from 1 to 3.5, most preferably from 1.5 to 3. Preferably, at least one phosphonic acid based complexing agent is present, preferably in an amount from 0.1 to 5 mmoles/litre, most preferably from 0.5 to 3 mmoles/litre. If a protective colloid is present, its concentration is preferably from about 0.001 to about 0.5 moles/litre, most preferably from 0.02 to 0.05 moles/litre. If a radical scavenger is present, its concentration is preferably from 0.01 to 1 moles/litre, most preferably from 0.02 to 0.2 moles/litre. Particularly preferred compositions comprise at least one phosphonic acid based complexing agent selected from the group consisting of 1-hydroxyethylidene-1,1-diphosphonic acid, 1-aminoethane-1,1-diphosphonic acid, aminotri (methylenephosphonic acid), ethylene diamine tetra (methylenephosphonic acid), hexamethylene diamine tetra (methylenephosphonic acid), diethylenetriamine penta (methylenephosphonic acid), diethylenetriamine hexa (methylenephosphonic acid), 1-aminoalkane-1,1-diphosphonic acids (such as morpholinomethane diphosphonic acid, N,N-dimethyl aminodimethyl diphosphonic acid, aminomethyl diphosphonic acid), reaction products and salts thereof, preferably sodium salts. Useful protective colloids include tin compounds, such as alkali metal stannate, particularly sodium stannate (Na2(Sn(OH)6). Useful radical scavengers include pyridine carboxylic acids, such as 2,6-pyridine dicarboxylic acid. Suitably the amount of chloride ions is below about 300 mmoles/litre, preferably below 50 mmoles/litre, more preferably below 5 mmoles/litre, most preferably below 0.5 mmoles/litre.

The temperature in the reactor is suitably maintained below the boiling point of the reactants and the product stream at the prevailing pressure, preferably from 20 to 80°C, most preferably from 30 to 60°C. The pressure maintained within the reactor is suitably slightly subatmospheric, preferably from 30 to 100 kPa absolute, most preferably from 65 to 95 kPa absolute.

The reactor may comprise one or several vessels, for example arranged vertically, horizontally or inclined. The reactants may be fed directly to the reactor or via a separate mixing device. Suitably the reactor is a preferably substantially tubular through-flow vessel or pipe, most preferably comprising means for mixing the reactants in a substantially uniform manner. Such means for mixing are described in e.g. US 6790427 and US patent application Publ. No. 2004/0175322.

The length (in the main flow direction) of the reactor used is preferably from 150 to 1500 mm, most preferably from 300 to 900 mm. It has been found favourable to use a substantially tubular reactor with an inner diameter from 25 to 300 mm, preferably from 50 to 150 mm. It is particularly favourable to use a substantially tubular reactor having a preferred ratio of the length to the inner diameter from 12:1 to 1:1, most preferably from 8:1 to 4:1. A suitable average residence time in the reactor is in most cases from 1 to 60 seconds, preferably from 3 to 20 seconds.

The reaction of alkali metal chlorate, acid and hydrogen peroxide results in the formation of a product stream in the reactor, normally comprising both liquid and foam, and containing chlorine dioxide, oxygen, alkali metal salt of the acid and, in most cases, some remaining unreacted feed chemicals. Chlorine dioxide and oxygen may be present both as dissolved in the liquid and as gas bubbles. If sulphuric acid is used the alkali metal salt is a sulphate salt. It has been found possible to achieve a conversion degree of alkali metal chlorate to chlorine dioxide from 75% to 100%, preferably from 80 to 100%, most preferably from 95 to 100%.

The feed chemicals, including acid, alkali metal chlorate and reducing agent, are preferably fed close to one end of the reactor and the product stream is preferably withdrawn at the other end of the reactor.

The product stream withdrawn from the reactor, including any liquid, foam and gas therein, is brought to the eductor, preferably by a suction force created by the eductor. The product stream is then mixed with motive water fed to the eductor to form a diluted product stream. Any kind of eductor may be used, although it is particularly preferred to use an eductor where the motive water is brought to flow in an at least partially spiral or helical manner as described in US 6790427.

The diluted product stream obtained from the eductor still comprises chlorine dioxide, oxygen and alkali metal salt of the acid. At least some of the oxygen should be removed by any suitable means, for example a cyclone separator with an air vent, a large diameter pipe with an air vent valve, a separator with a level control and an automatic vent valve or any other existing means for separating inert gasses like air from liquid streams. In a preferred embodiment the diluted product stream is brought to a vented tank where it is held at a time sufficient for at least some of the oxygen to disengage from the liquid. In order to minimise the loss of chlorine dioxide the temperature in the tank is preferably maintained from 1 to 20°C, most preferably from 4 to 10°C.

Part of the diluted product stream, preferably from 10 to 90%, most preferably from 20 to 80%, particularly most preferably from 30 to 70%, is withdrawn and constitutes the actual product from the process, i.e. an aqueous solution comprising chlorine dioxide, preferably in a concentration above 4 grams/litre. This may be done before, during or after the removal of oxygen. If oxygen is removed in a vented tank, it is preferred to withdraw from the same tank the part of the diluted product stream that should constitute the actual product.

Water is added to the non-withdrawn part of the diluted product stream to form a recycle stream, preferably in an amount to give a concentration of chlorine dioxide in the recycle stream from 2 to 12 grams/litre, most preferably from 3 to 6 grams/litre. The added water preferably has a temperature sufficiently low to give a temperature of the recycle stream below 20°C, preferably below 15°C, most preferably below 10°C, particularly most preferably below 5°C. It is also possible to use other cooling means such as heat exchangers or the like. There is no lower temperature limit as long as it does not go below the freezing point. The recycle stream is then fed to the eductor as motive water and mixed therein with the product stream from the reactor.

The process of the invention is particularly suitable for production of chlorine dioxide in small-scale, for example from 0.5 to 250 kg ClO₂/hr, preferably from 10 to 150 kg ClO₂/hr. Unlike other chlorate based processes operated without a separate absorption tower the process of the invention enables production of chlorine dioxide solutions of high concentration, for example from 4 to 10 grams/litre or more.

A typical small-scale production unit of the invention normally includes only one reactor, although it is possible to arrange several, for example up to 15 or more reactors in parallel, for example as a bundle of tubes.

The invention further concerns a production unit for the production of an aqueous solution comprising chlorine dioxide, said unit comprising:
a) a reactor provided with one or more feed inlets for acid, hydrogen peroxide and alkali metal chlorate;
b) an eductor connected to the reactor and provided with an inlet for motive water and means for mixing a product stream from the reactor with motive water to obtain a diluted product stream;
c) means for removing oxygen from a diluted product stream obtained from the eductor;
d) means for withdrawing part of the diluted product stream;
e) means for adding water to the non-withdrawn part of the diluted product stream to obtain a recycle stream; and,
f) means for feeding the recycle stream as motive water to the eductor.
Regarding preferred features of the production unit the above description of the process is referred to.

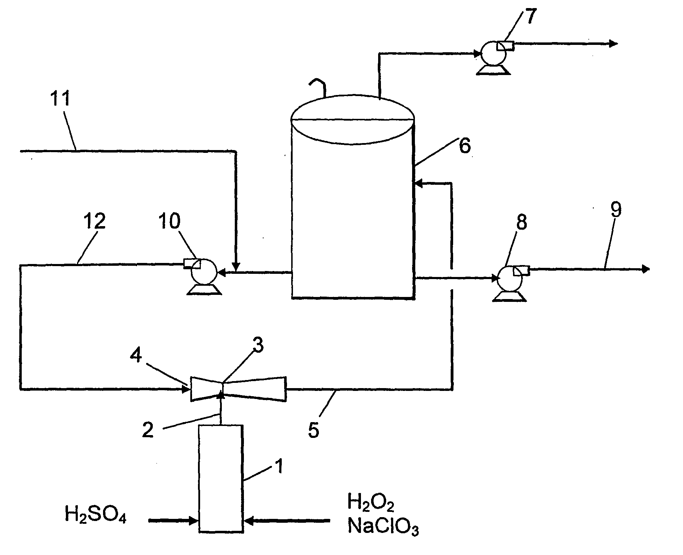

An embodiment of the invention will now be described with reference to the enclosed drawing. The scope of the invention is, however, not limited to this embodiment

The Figure schematically shows a process scheme of the invention.

Referring to the Figure, sulfuric acid and a pre-mixed aqueous solution of sodium chlorate and hydrogen peroxide are fed to a vertical through-flow tubular reactor 1 and reacted therein to form a product stream 2 of liquid and foam comprising chlorine dioxide, oxygen, sodium sulfate and some remaining sulfuric acid and sodium chlorate. An eductor 3 is supplied with motive water 4 and generates a slightly subatmospheric pressure bringing the product stream out from the reactor 1 into the eductor 3 where it is mixed with the motive water to form a diluted product stream 5, which is brought to a tank 6. A part of the diluted product stream is withdrawn from the tank by a pump 8 as a final product 9, i.e. an aqueous solution comprising chlorine dioxide. The tank 6 is provided with a fan 7 venting out oxygen that goes off from the diluted product stream therein. The non-withdrawn part of the diluted product solution is brought out from the tank 6 by the pump 10 and mixed with cold water 11, e.g. having a temperature from 1 to 20°C, preferably from 4 to 10°C, to form a recycle stream 12. The gas vented out from the tank 6 may also contain some chlorine dioxide and to minimize the losses thereof it is possible to scrub the gas with water to absorb most of the chlorine dioxide (not shown in the Figure) and return it to the diluted product stream or the recycle stream. The recycle stream 12 is returned to the eductor and fed thereto as motive water 4. In a process producing a 6 grams ClO₂ /litre product solution 9 it may be suitable to add enough water to obtain a recycle stream 12 comprising from 3 to 4.5 grams ClO₂ per litre, depending on how efficient the eductor is. In order to produce a 10 grams ClO₂ /litre product solution 9 it may be suitable to add enough water to obtain a recycle stream 12 comprising 7 grams ClO₂ per litre.

The process equipment, including the reactor 1, the eductor 3 and the tank 6, are suitably made from materials resistant to the chemicals they are in contact with, such as one or more of hydrogen peroxide, sodium chlorate, sulfuric acid and chlorine dioxide. Such materials include, for example, glass, tantalum, titanium, fiberglass reinforced plastic, fluoro plastics like PVDF (polyvinylidene fluoride) CPVC (chlorinated polyvinyl chloride), PTFE (polytetrafluoro ethylene), PFA (perfluoro alkoxy polymer), ECTFE (ethylene chlorotrifluoro ethylene) or FEP (fluorinated ethylene propylene), or the use of these materials as a liner material to a structural material like steel or stainless steel. Suitable fluoro plastics are sold under the trademarks Kynar®, Teflon® or Hafar®.

The invention will be further illustrated through the following example which, however, is not intended to limit the scope thereof. Unless otherwise stated, all parts and percentages refer to parts and percent by weight.

EXAMPLE: Chlorine dioxide was produced from sulfuric acid and a mixture of sodium chlorate and hydrogen peroxide in a plant as described in the Figure. One hour after start the following conditions were observed:

| | |
|---|---|
| Operating rate: | 45 kg/hr ClO₂ |
| Concentration of product solution (9): | 5.9 g/l ClO₂ |
| Flow of product solution (9): | 7 m³/hr |
| Flow of recycle stream (12): | 26 m³/hr |
| Flow of cold water (11): | 7.5 m³/hr |
| Temperature of cold water (11): | 10°C |
| Temperature in tank (6): | 14°C |

## Claims

1. A process for the production of an aqueous solution comprising chlorine dioxide, said process comprising the steps of continuously:
(a) feeding to a reactor an acid, hydrogen peroxide and alkali metal chlorate;
(b) reacting the alkali metal chlorate with the acid and the hydrogen peroxide to form a product stream containing chlorine dioxide, oxygen and alkali metal salt of the acid;
(c) bringing the product stream from the reactor to an eductor and mixing it with motive water fed to the eductor and thereby forming a diluted product stream;
(d) removing oxygen from the diluted product stream;
(e) withdrawing part of the diluted product stream, before, during or after the step of removing oxygen;
(f) adding water to the non-withdrawn part of the diluted product stream to form a recycle stream; and,
(g) bringing the recycle stream to the eductor and feeding it thereto as motive water.

2. A process as claimed in claim 1, wherein the water added to form the recycle stream has a temperature sufficiently low to give a temperature of the recycle stream below 20°C.

3. A process as claimed in any one of the claims 1-2, wherein the water added to form the recycle stream is added in an amount to give a concentration of chlorine dioxide in the recycle stream from 2 grams/litre to 12 grams/litre.

4. A process as claimed in any one of the claims 1-3, wherein the diluted product stream is brought to a vented tank where it is held at a time sufficient for at least some of the oxygen to go off.

5. A process as claimed in claim 4, wherein the part of the diluted product stream withdrawn in step (e) is withdrawn from the vented tank.

6. A process as claimed in any one of the claims 4-5, wherein the temperature in the vented tank is maintained from to 20°C.

7. A process as claimed in any one of the claims 1-6, wherein from about 10 to about 90% of the diluted product stream is withdrawn in step (e).

8. A process as claimed in any one of the claims 1-7, wherein the diluted product stream contains more than 4 grams/litre of chlorine dioxide.

9. A process as claimed in any one of the claims 1-8, wherein the acid is sulfuric acid.

10. A process as claimed in any one of the claims 1-9, wherein the reactor is a through-flow vessel or a pipe.

11. A process as claimed in any one of the claims 1-10, wherein the acid, the alkali metal chlorate and the hydrogen peroxide are fed close to one end of the reactor while the product stream is withdrawn at the other end of the reactor.

12. Production unit for the production of an aqueous solution comprising chlorine dioxide, said unit comprising:
(a) a reactor provided with one or more feed inlets for acid, hydrogen peroxide and alkali metal chlorate;
(b) an eductor connected to the reactor and provided with an inlet for motive water and means for mixing a product stream from the reactor with motive water to obtain a diluted product stream;
(c) means for removing oxygen from a diluted product stream obtained from the eductor;
(d) means for withdrawing part of the diluted product stream;
(e) means for adding water to the non-withdrawn part of the diluted product stream to obtain a recycle stream; and,
(f) means for feeding the recycle stream as motive water to the eductor.

## Patentansprüche

1. Ein Verfahren zur Herstellung einer wässrigen Chlordioxid umfassenden Lösung, wobei das Verfahren die folgenden kontinuierlichen Schritte umfasst:
(a) Beschicken eines Reaktors mit einer Säure, Wasserstoffperoxid und Alkalimetallchlorat;
(b) Umsetzen des Alkalimetallchlorats mit der Säure und dem Wasserstoffperoxid, um einen Produktstrom enthaltend Chlordioxid, Sauerstoff und ein Alkalimetallsalz der Säure zu bilden;
(c) Transportieren des Produktstroms aus dem Reaktor in einen Eduktor und Mischen desselben mit Treibwasser, welches in den Eduktor eingespeist wird, wodurch sich ein verdünnter Produktstrom bildet;
(d) Entfernen von Sauerstoff aus dem verdünnten Produktstrom;
(e) Abziehen eines Teils des verdünnten Produktstroms vor, während oder nach dem Schritt des Entfernens des Sauerstoffs;
(f) Zugeben von Wasser zu dem nicht abgezogenen Teil des verdünnten Produktstroms, um einen Rücklaufstrom zu bilden; und
(g) Transportieren des Rücklaufstroms zu dem Eduktor und Einspeisen desselben als Treibwasser.

2. Ein Verfahren wie in Anspruch 1 beansprucht, wobei das Wasser, welches zugegeben wurde, um den Rücklaufstrom zu bilden, eine Temperatur aufweist, die ausreichend niedrig ist, um eine Rücklaufstrom-Temperatur von niedriger als 20 °C zu ergeben.

3. Ein Verfahren wie in einem der Ansprüche 1 bis 2 beansprucht, wobei das Wasser, welches zugegeben wurde, um den Rücklaufstrom zu bilden, in einer Menge zugegeben wird, um eine Konzentration von Chlordioxid von 2 g/l bis 12 g/l in dem Rücklaufstrom zu ergeben.

4. Ein Verfahren wie in einem der Ansprüche 1 bis 3 beansprucht, wobei der verdünnte Produktstrom in einen belüfteten Tank gegeben wird, wo er über einen Zeitraum gehalten wird, der ausreicht, um zumindest einen Teil des Sauerstoffs abziehen zu lassen.

5. Ein Verfahren wie in Anspruch 4 beansprucht, wobei der Teil des verdünnten Produktstroms, welcher in Schritt (e) abgezogen wurde, aus dem belüfteten Tank abgezogen wird.

6. Ein Verfahren wie in einem der Ansprüche 4 bis 5 beansprucht, wobei die Temperatur in dem belüfteten Tank bei 1 bis 20 °C gehalten wird.

7. Ein Verfahren wie in einem der Ansprüche 1 bis 6 beansprucht, wobei etwa 10 bis etwa 90% des verdünnten Produktstroms in Schritt (e) abgezogen wird.

8. Ein Verfahren wie in einem der Ansprüche 1 bis 7 beansprucht, wobei der verdünnte Produktstrom mehr als 4 g/l an Chlordioxid enthält.

9. Ein Verfahren wie in einem der Ansprüche 1 bis 8 beansprucht, wobei die Säure Schwefelsäure ist.

10. Ein Verfahren wie in einem der Ansprüche 1 bis 9 beansprucht, wobei der Reaktor ein Durchflussbehälter oder eine Röhre ist.

11. Ein Verfahren wie in einem der Ansprüche 1 bis 10 beansprucht, wobei die Säure, das Alkalimetallchlorat und das Wasserstoffperoxid nahe an einem Ende des Reaktors zugegeben werden, während der Produktstrom am anderen Ende des Reaktors abgezogen wird.

12. Produktionseinheit für die Herstellung einer wässrigen Chlordioxid umfassenden Lösung, wobei die Einheit umfasst:
(a) einen Reaktor, versehen mit einer der mehreren Einlassöffnungen für Säure, Wasserstoffperoxid und Alkalimetallchlorat;
(b) einen Eduktor, verbunden mit dem Reaktor und versehen mit einem Einlass für Treibwasser und einer Vorrichtung zum Mischen eines Produktstroms aus dem Reaktor mit Treibwasser, um einen verdünnten Produktstrom zu erhalten;
(c) Vorrichtung zum Entfernen von Sauerstoff aus einem verdünnten Produktstrom, der aus dem Eduktor erhalten wird;
(d) Vorrichtung zum Abziehen eines Teils des verdünnten Produktstroms;
(e) Vorrichtung zum Zugeben von Wasser zu dem nicht abgezogenen Teil des verdünnten Produktstroms, um einen Rücklaufstrom zu erhalten; und
(f) Vorrichtung zum Einspeisen des Rücklaufstroms als Treibwasser in den Eduktor.

## Revendications

1. Procédé de production d'une solution aqueuse comprenant du dioxyde de chlore, ledit procédé comprenant les étapes continues consistant à :
(a) délivrer à un réacteur un acide, du peroxyde d'hydrogène et un chlorate de métal alcalin ;
(b) faire réagir le chlorate de métal alcalin avec l'acide et le peroxyde d'hydrogène pour former un courant de produit contenant du dioxyde de chlore, de l'oxygène et un sel de métal alcalin de l'acide ;
(c) amener le courant de produit provenant du réacteur vers un éjecteur et le mélanger avec de l'eau motrice délivrée à l'éjecteur et former ainsi un courant de produit dilué ;
(d) enlever de l'oxygène du courant de produit dilué ;
(e) retirer une partie du courant de produit dilué, avant, pendant ou après l'étape d'enlèvement de l'oxygène ;
(f) ajouter de l'eau à la partie non retirée du courant de produit dilué pour former un courant de recyclage ; et
(g) amener le courant de recyclage vers l'éjecteur et lui délivrer en tant qu'eau motrice.

2. Procédé selon la revendication 1, dans lequel l'eau ajoutée pour former le courant de recyclage a une température suffisamment basse pour donner une température de courant de recyclage en dessous de 20 °C.

3. Procédé selon l'une quelconque des revendications 1 à 2, dans lequel l'eau ajoutée pour former le courant de recyclage est ajoutée dans une quantité pour donner une concentration de dioxyde de chlore dans le courant de recyclage de 2 grammes/litre à 12 grammes/litre.

4. Procédé selon l'une quelconque des revendications 1 à 3, dans lequel le courant de produit dilué est amené vers un réservoir éventé où il est maintenu pendant un temps suffisant pour qu'au moins une partie de l'oxygène s'en aille.

5. Procédé selon la revendication 4, dans lequel la partie du courant de produit dilué retirée à l'étape (e) est retirée du réservoir éventé.

6. Procédé selon l'une quelconque des revendications 4 à 5, dans lequel la température dans le réservoir éventé est maintenue de 1 à 20 °C.

7. Procédé selon l'une quelconque des revendications 1 à 6, dans lequel environ 10 à environ 90 % du courant de produit dilué sont retirés à l'étape (e).

8. Procédé selon l'une quelconque des revendications 1 à 7, dans lequel le courant de produit dilué contient plus de 4 grammes/litre de dioxyde de chlore.

9. Procédé selon l'une quelconque des revendications 1 à 8, dans lequel l'acide est de l'acide sulfurique.

10. Procédé selon l'une quelconque des revendications 1 à 9, dans lequel le réacteur est une cuve à écoulement ou un tuyau.

11. Procédé selon l'une quelconque des revendications 1 à 10, dans lequel l'acide, le chlorate de métal alcalin et le peroxyde d'hydrogène sont délivrés près d'une extrémité du réacteur pendant que le courant de produit est retiré à l'autre extrémité du réacteur.

12. Unité de production pour la production d'une solution aqueuse comprenant du dioxyde de chlore, ladite unité comprenant :
(a) un réacteur pourvu d'une ou plusieurs entrées d'alimentation pour un acide, du peroxyde d'hydrogène et un chlorate de métal alcalin ;
(b) un éjecteur raccordé au réacteur et pourvu d'une entrée pour de l'eau motrice et un moyen pour mélanger un courant de produit provenant du réacteur avec l'eau motrice pour obtenir un courant de produit dilué ;
(c) un moyen pour enlever l'oxygène du courant de produit dilué obtenu à partir de l'éjecteur ;
(d) un moyen pour retirer une partie du courant de produit dilué ;
(e) un moyen pour ajouter de l'eau à la partie non retirée du courant de produit dilué pour obtenir un courant de recyclage ; et
(f) un moyen pour délivrer le courant de recyclage sous forme d'eau motrice à l'éjecteur.
